# EUROPEAN PATENT APPLICATION

(11) **EP 0 781 619 A1**
(43) Date of publication of application: **02.07.1997**
(21) Application number: 95309156.8
(22) Date of filing: 15.12.1995
(51) Int. Cl.: B23H 7/02, B23H 9/00

(54) **Method of making silicone carbide wafers from silicon carbide bulk crystals**

(71) Applicant: CREE RESEARCH, INC., Durham, North Carolina 27713 (US)
(72) Inventor: Sugg, Claude G., Jr., Raleigh, North Carolina 27604-4721 (US); Edmond, John A., Cary, North Carolina 27511 (US)
(74) Representative: Bankes, Stephen Charles Digby

(57) **Abstract**

A method is disclosed for producing silicon carbide wafers from silicon carbide boules. The method comprises positioning a wire electrode adjacent a boule of 4H silicon carbide that is doped sufficiently to be conductive; maintaining a flow of water between the boule and the wire; applying an electric current on a periodic basis to the wire electrode that is sufficient to cause a discharge arc between the boule and the wire; and moving the wire across the boule while applying the current periodically to thereby slice a wafer of 4H silicon carbide from the boule.

## Description

The present invention relates to methods of making semiconductor wafers from semiconductor bulk crystals, and in particular relates to a method of forming wafers of 4H silicon carbide from silicon carbide bulk crystals or "boules" using electrical discharge machining.

Semiconductor devices are often formed on wafers of semiconductor material; i.e., thin, generally circular slices of the semiconductor material that have a diameter of between about one and four inches in common circumstances.

As part of the overall process of producing a wafer, a bulk crystal (sometimes referred to as an ingot or a boule) is first grown using one of several familiar techniques such as growth from a melt or sublimation. The bulk crystal is then typically ground along one side to produce a surface called a "primary flat" and then along another side to form what is referred to as the "secondary flat." The position of these flats with respect to one another is often used to define the nature and orientation of the crystal.

After the ingot is grown, and then potentially oriented and characterized by the flats, the ingot is sliced into wafers. The most common slicing technique is the use of a diamond saw to slice the wafers from the boule. The sliced wafers are then "lapped" using an appropriate abrasive to give a surface that is uniform to within one or two microns of perfect flatness. The wafer can then be chemically etched or polished.

Recent years have witnessed an increase in the availability and use of silicon carbide as an appropriate--indeed even as a superior--material for a number of semiconductor applications. Silicon carbide is stable at high temperatures, has a wide bandgap, a high saturated electron drift velocity, and good radiation hardness.

Silicon carbide is also, however, one of the physically hardest materials in existence. Indeed, it is widely used as an abrasive either alone or in composite form. Accordingly, operations which are relatively simple to carry out in softer materials such as silicon, including using a diamond saw to slice a bulk crystal into wafers, become very difficult in silicon carbide.

Diamond saws can be used to cut silicon carbide bulk crystals into wafers but they have certain disadvantages. Most fundamentally, diamond saws exert stress against the crystals as they cut. This in turn tends to heat the material being sliced, and to cause stress cracks, warpage, and surface damage to the wafers. All of these will generally have a detrimental effect on devices formed using the wafers, and can even render the wafers so defective as to be useless.

Therefore, it is an object of the present invention to provide a method of forming silicon carbide wafers from silicon carbide boules that avoids the mechanical stress and damage that techniques such as diamond saws tend to generate.

The invention meets this object with a method of producing silicon carbide portions from bulk silicon carbide crystals. The method uses electric discharge machining to cut a boule of 4H silicon carbide that is doped sufficiently to be conductive using an electrode tool and a dielectric fluid.

The foregoing and other objects, advantages and features of the invention, and the manner in which the same are accomplished, will become more readily apparent upon consideration of the following detailed description of the invention.

The invention is a method of producing silicon carbide portions from bulk silicon carbide crystals comprising electric discharge machining ("EDM") of a boule of 4H silicon carbide that is doped sufficiently to be conductive using an electrode tool and a dielectric fluid.

As known to those familiar with silicon carbide, the 4H polytype has particularly low resistivity which makes it an excellent candidate for this type of machining. The suitability of n-type 4H material is much greater than that, for example, of 6H silicon carbide, and thus relatively high EDM cutting speeds (25 mils per minute; 1000 mils = 1 inch) can be achieved with the invention using 4H silicon carbide. In contrast, cutting high resistivity material such as low doped p-type silicon carbide or semi-insulating material is very difficult using electric discharge machining. In particular, 4H silicon carbide with an n-type carrier concentration of greater than about 10¹⁵ cm⁻³ is best suited for this invention.

In general, electric discharge machining is a relatively well-understood technology, although its use in the present circumstances is novel. Thus, the nature and operation of an EDM machine will not be discussed in detail herein, other than to briefly summarize that in EDM, electrical discharges are established across a dielectric medium (such as water or another dielectric fluid) between a workpiece (here, the silicon carbide boule) and an electrode. The discharge tends to remove pieces of the workpiece. When a wire is used as the electrode, it is usually oriented vertically and can make relatively fine cuts in the workpiece. Recent examples of EDM machinery are set forth in U.S. Patent Nos. 5,171,955 and 5,243,165 to Hosaka. These are included as examples, and not in any manner of limitation, the use of EDM being relatively widely established for cutting metals.

In typical EDM techniques, and in the present invention, the discharge is usually established across a dielectric fluid which for the present invention preferably comprises deionized water. As set forth above, when a wire is used as the EDM electrode, the method preferably comprises slicing a wafer of 4H silicon carbide from a bulk single crystal. It will be understood, however, that a different electrode could be used to machine a 4H silicon carbide workpiece in some other fashion or into some other shape, while still falling within the present invention. For example, silicon carbide boules are sometimes cored, and it is expected that EDM will work appropriately for that as well.

Expressed as several steps, the method of the invention comprises positioning a wire electrode adjacent a boule of 4H silicon carbide that is doped sufficiently to be conductive. A flow of deionized water is maintained between the boule and the wire while an electric current is applied on a periodic basis to the wire electrode. The applied current is sufficient to cause a discharge arc between the boule and the wire. The wire is moved across the boule while applying the current periodically to thereby slice a wafer of 4H silicon carbide from the boule.

Preferably, the method further comprises flushing material from between the wire and the boule that has been dislodged from the boule by the discharge. If the material is not flushed sufficiently, there is a tendency for the wire and the material to short circuit rather than to produce the proper cutting discharge.

The EDM technique can be described as a "spark" process. In other words, EDM uses a periodic discharge rather than a continuous one to cut the 4H silicon carbide material. Generally speaking, the periodic sparking is defined in terms of "on" time and "off" time. When on time is longer, more power is applied to the wire and results in generally faster cutting. As a corresponding factor, however, the finish generated by the faster cutting is of lesser quality than the finish generated by slower cutting in the same material, and accuracy can suffer. Additionally, if on time is too great, the wire can be prone to breakage.

To moderate this, a particular off time is selected. Off time is defined as the length of time that the electricity is turned off to the wire between sparks. Off time provides the opportunity for particles that have been machined from the bulk single crystal to be flushed away and avoid the shorting between the wire and the workpiece referred to earlier.

Accordingly, in a preferred embodiment, the invention comprises applying an electric current on a periodic basis to the wire at a current of between about 0 and 350 amps, and in which the current is applied for an on time of between about 2.0 and 2.5 microseconds followed by an off time of between about 14 and 16 microseconds. The open circuit voltage is preferably about 350 volts (V).

In a specific example of the present invention, a Sodic Model 280L EDM machine with an optional high-power circuit (PCD kit) was used to slice wafers of 4H silicon carbide from a bulk single crystal of silicon carbide. The on time was set for 2 microseconds, and the off time for 14 microseconds. The peak current (IP) was set for 350 amps, the average current (MA) for approximately 50 milliamps, and the open circuit voltage was set at 350 volts. The cutting wire was a GISCO® wire with a 0.010" diameter. The wire is formed of a base material of copper and zinc that is coated with zinc, has a tensile strength of 130,000 psi, an elongation of less than 2%, and a conductivity of 20% (IACS).

After a wafer is cut according to the present invention, it can be further prepared in manners well understood to those of ordinary skill in this art. Further handling of the wafer can include lapping and polishing the wafer, and then etching it to prepare the surface for further processing, typically epitaxial growth. Chemical etching techniques are appropriate, as are plasma techniques such as are set forth in U.S. Patent No. 4,946,547 which is assigned to the assignee of the present invention and incorporated entirely herein by reference.

Overall, the invention provides a method of producing 4H wafers of silicon carbide useful as device precursors which comprises growing a bulk single crystal of 4H silicon carbide that is doped sufficiently to be conductive, slicing a wafer from the bulk single crystal using an EDM wire, and finishing the surface of the sliced wafer. A successful method of bulk single crystal growth of silicon carbide is set forth in U.S. Patent No. 4,866,005 to Davis, et al., which is assigned to the assignee of the present invention and which is incorporated entirely herein by reference.

The method can then further comprise the step of growing an epitaxial layer of 4H silicon carbide on the finished surface of the wafer. As understood by those of ordinary skill in this art, the epitaxial layer can be the same conductivity type as the wafer, or the opposite conductivity type, and can itself be the foundation for yet further epitaxial layers to produce junctions and other device elements. Exemplary epitaxial growth methods for silicon carbide are set forth in U.S. Patent Nos. 4,912,063, 4,912,064, 5,011,549, and 5,119,540.

Thus, in yet another aspect, the invention comprises the wafers produced according to the method of the invention described herein.

In summary, the invention provides very flat and parallel wafers, produces very little kerf loss, and avoids the use of mechanical force that would otherwise stress the crystal structure. For example, when cutting silicon carbide with a diamond saw, the loss of kerf is approximately 40 mils, while with EDM, the loss is reduced to 12 mils. The EDM system of the invention is accurate, more versatile than diamond sawing (EDM cuts the same regardless of crystal orientation while a diamond saw cuts differently), is easy to set up, and can be automated. Finally, the invention avoids exerting excessive pressure and heat against the material being sliced, thereby avoiding stress warpage, heat effects and other surface damage.

## Claims

1. A method of producing silicon carbide wafers from silicon carbide boules, the method comprising:
positioning a wire electrode adjacent a boule of 4H silicon carbide that is doped sufficiently to be conductive;
maintaining a flow of water between the boule and the wire;
applying an electric current on a periodic basis to the wire electrode that is sufficient to cause a discharge arc between the boule and the wire; and
moving the wire across the boule while applying the current periodically to thereby slice a wafer of 4H silicon carbide from the boule.

2. A method according to Claim 1 and further comprising flushing material from between the wire and the boule that has been dislodged from the boule by the discharge between the wire and the boule.

3. A method according to Claim 1 or claim 2 wherein the step of applying an electric current on a periodic basis to the wire electrode comprises applying a current of between 0 and 350 amps.

4. A method according to any preceding Claim wherein the step of applying an electric current on a periodic basis to the wire electrode comprises applying a current in a cyclical pattern in which the current is applied for between 2.0 and 2.5 microseconds and then turned off for between 14 and 16 microseconds.

5. A method of producing silicon carbide portions from bulk silicon carbide crystals, the method comprising electric discharge machining of a boule of 4H silicon carbide that is doped sufficiently to be conductive using an electrode tool and a dielectric fluid.

6. A method according to Claim 5 wherein the electrode tool comprises a wire and the dielectric fluid comprises deionized water.

7. A method according to Claim 5 or claim 6 wherein the step of machining a boule comprises slicing a wafer of 4H silicon carbide from the boule.

8. A method of producing wafers of 4H silicon carbide useful as device precursors, the method comprising:
growing a bulk single crystal of 4H silicon carbide that is doped sufficiently to be conductive; and
slicing a wafer from the bulk single crystal using an EDM wire.

9. A method according to Claim 1, Claim 7, or Claim 8 further comprising the steps of finishing the wafer surface by:
lapping the sliced wafer;
polishing the lapped wafer; and
etching the polished wafer to prepare the surface for epitaxial growth.

10. A method according to Claim 9 and further comprising the step of growing an epitaxial layer of 4H silicon carbide on the finished surface of the wafer.

11. A method according to Claim 8 wherein the step of slicing the wafer comprises:
positioning a wire electrode adjacent the bulk single crystal of 4H silicon carbide;
maintaining a flow of deionized water between the boule and the wire;
applying an electric current on a periodic basis to the wire electrode that is sufficient to cause a discharge arc between the bulk single crystal and the wire; and
moving the wire across the bulk single crystal while applying the current periodically.
